# EUROPÄISCHE PATENTSCHRIFT

(11) **EP 1 584 176 B1**
(45) Veröffentlichungstag und Bekanntmachung des Hinweises auf die Patenterteilung: **28.04.2010**
(21) Anmeldenummer: 03785580.6
(22) Anmeldetag: 17.12.2003
(51) Int. Cl.: H04M 3/42

(54) **VERFAHREN UND ANORDNUNG ZUR STEUERUNG UND/ODER ÜBERWACHUNG EINES AN EIN KOMMUNIKATIONS-SYSTEM ANGESCHLOSSENEN ENDGERÄTES**
METHOD AND CONFIGURATION FOR CONTROLLING AND/OR MONITORING A TERMINAL CONNECTED TO A COMMUNICATIONS SYSTEM
PROCEDE ET DISPOSITIF POUR COMMANDER ET/OU SURVEILLER UN TERMINAL RACCORDE A UN SYSTEME DE COMMUNICATION

(30) Priorität: 17.01.2003 DE 10301685
(43) Veröffentlichungstag der Anmeldung: 12.10.2005
(73) Patentinhaber: SIEMENS AKTIENGESELLSCHAFT, 80333 München (DE)
(72) Erfinder: MARSCHALL, Andreas, 45130 Essen (DE); SCHRÖTER, Otto, 45307 Essen (DE)
(74) Vertreter: Fritzsche, Thomas
(86) Internationale Anmeldenummer: PCT/DE2003/004171
(87) Internationale Veröffentlichungsnummer: WO 2004/068830

(56) Entgegenhaltungen:
- EP-A- 1 126 685
- US-B1- 6 343 116
- NOVELL INC., LUCENT TECHNOLOGIES: "NetWare Telephony Services Application Programming Interface (TSAPI) Version 2, Issue 3.0" -, April 1998 (1998-04), XP0002267338

## Beschreibung

Die Erfindung betrifft ein Verfahren zur Steuerung und/oder Überwachung eines an ein Kommunikations-System angeschlossenen Endgerätes und eine Anordnung zur Durchführung des Verfahrens.

In modernen Kommunikations-Systemen und Kommunikationsanordnungen werden Kommunikations-Endgeräte und Anschlüsse häufig mit Hilfe PC-gestützter Anwendungen gesteuert und überwacht. Die Verknüpfung von Kommunikations-Endgeräten und -Anschlüssen mit PC-gestützten Steuerungsprogrammen wird in der Literatur häufig auch als CTI ("Computer Telephony Integration") bezeichnet; die zur Durchführung der Überwachungs- und Steuerungsfunktion notwendige Hard- und Software wird häufig zusammengefasst als CTI-Lösung bezeichnet.

CTI-Lösungen sind nicht nur in Anordnungen mit leitungsvermittelnder Kommunikation, also beispielsweise mit "klassischen" analogen und ISDN-Kommunikationsanlagen, sinnvoll einzusetzen, sondern werden auch in paketvermittelnden Kommunikationsanordnungen, den sog. Voice-over-IP-Systemen (VoIP), vorteilhaft eingesetzt. Das liegt unter anderem daran, dass in VoIP-Kommunikationsanordnungen für die Verbindung zwischen einem Kommunikationsknoten (also der VoIP-"Kommunikationsanlage") und einem VoIP-Kommunikations-Endgerät häufig solche Kommunikationsprotokolle zum Einsatz kommen, die nicht alle die Leistungsmerkmale unterstützen, die beispielsweise aus der leitungsvermittelnden Kommunikation bekannt sind.

Bei den CTI-Lösungen wird zwischen den sog. First-Party-Lösungen und den Third-Party-Lösungen unterschieden. Bei den First-Party-Lösungen ist ein zu steuerndes bzw. zu überwachendes Endgerät mit einer speziellen Schnittstelle versehen, mit der dieses Endgerät direkt mit einem zur Steuerung bzw. zur Überwachung eingesetzten Computer (PC) verbunden ist. Da bei diesem Verfahren jedes zu steuernde bzw. zu überwachende Endgerät mit einer entsprechenden eigenen Schnittstelle ausgerüstet sein muss, werden speziell bei Kommunikationsanordnungen mit vielen zu überwachenden bzw. zu steuernden Enderäten die sog. Third-Party-CTI-Lösungen bevorzugt eingesetzt, bei denen nur der Kommunikationsknoten (die Kommunikationsanlage) selbst mit einer Computerschnittstelle ausgerüstet ist. An dieser Schnittstelle ist dann ein Server (TSP = Telephony Service Provider) angeschlossen, auf den alle PC's mit solchen Anwendungen zugreifen, die zur Steuerung bzw. zur Überwachung von Kommunikationsteilnehmern (Endgeräte) oder Kommunikations-Schnittstellen ("Subscriber-Lines", "Trunks") eingesetzt werden.

Die Verbindung zwischen dem TSP und dem Kommunikationsknoten wird mit einem dafür genormten Protokoll, häufig dem CSTA-Protokoll (CSTA = Computer Supported Telephony Applikation), betrieben. Über eine genormte Schnittstelle des Kommunikationsknotens, die sog. CSTA-Schnittstelle, greift der TSP auf den Kommunikationsknoten zu und veranlasst dort beispielsweise die Überwachung von einzelnen Kommunikations-Schnittstellen oder Endgeräten, oder aber übermittelt auf diesem Wege Befehle an den Kommunikationsknoten, um Funktionen für bestimmte Endgeräte oder Leitungen auszulösen. Der Zugriff einer PC-gestützten Anwendung (CTI-Anwendung) auf den TSP findet ebenfalls anhand eines genormten Protokolls statt, häufig anhand des TAPI-Protokolls (TAPI = Telephony Application Programming Interface). Die zu diesem Standard konformen CTI-Anwendungen werden häufig auch als TAPI-Applikationen bezeichnet.

Der TSP umfasst eine Konfigurationsdatenbank (bzw. greift auf eine solche zu), in der für jede(s) steuerbare bzw. überwachbare Endgerät oder Leitung des Kommunikationsknotens ein Datensatz abgelegt ist. Dieser Datensatz umfasst zumindest eine datensatzindividuelle fortlaufende Nummer (eine sog. ID = Identification), die Rufnummer des betreffenden Endgerätes bzw. des betreffenden Anschlusses, sowie eine Beschreibung der steuer- und überwachbaren Funktionen des jeweiligen Endgerätes bzw. der jeweiligen Leitung. Ein solcher Datensatz wird häufig auch als Objekt oder als "TAPI-Line" (kurz: "Line") bezeichnet. Dabei ist anzumerken, dass nicht nur Endgeräte bzw. die solchen Endgeräten zugeordneten Teilnehmeranschlüsse eine Rufnummer besitzen und somit mit einem Datensatz verwaltet werden können, sondern auch Amts- und Querverbindungsleitungen ("Trunks"), Endgerätegruppen, Voice-Mail-Server und ähnliche in einem Kommunikationsknoten definierte Geräte, die anhand einer Rufnummer verwaltet werden können und somit auch in einem TSP bzw. in einer dem TSP zugeordneten Datenbank als "TAPI-Line" geführt werden können. Auch solche Geräte und Leitungen werden im Folgenden bei der Verwendung des Begriffs "Endgerät" betrachtet.

Alle diese steuer- bzw. überwachbaren Objekte und Geräte werden im Folgenden verkürzt als Endgeräte bezeichnet. Damit eine CTI-Applikation auf ein Endgerät zugreifen (dieses also steuern und oder überwachen) kann, müssen zumindest zwei Voraussetzungen erfüllt sein: Zum einen muss dieses Endgerät mittels eines Datensatzes als "TAPI-Line" in der Datenbank eines TSP's geführt sein, und zum anderen muss die CTI-Applikation Zugriff auf diesen Datensatz nehmen können. Eine CTI-Applikation muss also, bevor mit ihr ein Endgerät gesteuert bzw. überwacht werden kann, bei dem TSP, der dieser CTI-Applikation zugeordnet ist, eine Abfrage starten und feststellen, ob das gewünschte Endgerät mit einem Datensatz in der Datenbank des TSP verzeichnet ist. Der TSP übermittelt dann zu der CTI-Applikation verschiedene Angaben, die wiederum die Rufnummer, eine Identifikationsnummer und eine Beschreibung derjenigen Funktionen ("Capabilities") umfasst, die bezüglich dieses Endgerätes gesteuert bzw. überwacht werden können.

Bei den bekannten Third-Party-CTI-Lösungen hat sich als nachteilig erwiesen, dass eine CTI-Applikation nur solche Endgeräte steuern bzw. überwachen kann, die durch einen entsprechenden Datensatz als "TAPI-Line" in der Datenbank des TSP's geführt sind. Diejenigen Endgeräte, die noch nicht mit Hilfe des TSP's, der der jeweiligen CTI-Applikation zugeordnet ist, zugreifbar sind, müssen zunächst durch einen separaten, oft manuell durchzuführenden Administrationsvorgang in die Datenbank des TSP's eingetragen werden (Siehe z.B EP-A-1126685), bevor sie durch die CTZ-Applikation zugreifbar sind.

Aufgabe der Erfindung ist es, die Konfiguration von CTI-Lösungen zu vereinfachen.

Die Lösung dieser Aufgabe ist für das Verfahren durch die im Anspruch 1 angegebenen Merkmale und für die Anordnung durch die im Anspruch 9 angegebenen Merkmale gegeben.

Die Lösung sieht vor, dass zur Steuerung und / oder Überwachung von an einem Kommunikations-System angeschlossenen Endgeräten mit zumindest einer steuer- und / oder überwachbaren Funktion, wobei eine auf einem PC installierte Anwendung eine erste Nachricht mit der Rufnummer eines von ihr zu steuernden und / oder zu überwachenden Endgerätes zu einem Telefonie-Server sendet. Der Telefonie-Server übermittelt diese Rufnummer zum Kommunikations-System und das Kommunikations-System übermittelt in einer Antwort Endgeräte-Informationen, welche beschreiben, welche der Funktionen des dieser Rufnummer zugeordneten Endgerätes steuerbar und / oder überwachbar sind. Der Telefonie-Server weist eine Datenbank mit steuer- und / oder überwachbare Endgeräte beschreibenden Datensätzen und zumindest einen vorhandenen ergänzbaren Datensatz auf, der eine Identifikationsnummer für eines der Endgeräte enthält und der um die Rufnummer und die vom Kommunikations-System empfangenen Informationen dieses Endgerätes ergänzt wird. Der Telefonie-Server erzeugt einen weiteren ergänzbaren Datensatz mit einer weiteren Identifikationsnummer, wobei der Telefonie-Server zu dem PC mit der Anwendung aus dem ergänzten Datensatz die Rufnummer und die Endgeräte-Informationen übermittelt und damit das Endgerät durch den PC mit der Anwendung steuer- und / oder überwachbar ist. Durch das Vorhalten eines ergänzbaren ("neutralen") Datensatzes in der Datenbank des Telefonie-Servers können Anwendungen auch solche Endgeräte steuern und/oder überwachen, die noch nicht durch eine "TAPI-Line" in der Datenbank repräsentiert sind. Damit brauchen in der Datenbank - abgesehen von einem ergänzbaren Datensatz - nur Datensätze für solche Endgeräte gespeichert sein, die tatsächlich von einer oder mehreren Anwendungen gesteuert und/oder überwacht werden. Das "vorsorgliche" Registrieren vieler oder aller Endgeräte in der Datenbank, die zum Zeitpunkt der Konfiguration der Datenbank noch nicht steuerbar und/oder überwachbar sein sollen, kann damit entfallen. Die CTI-Anordnung ist dadurch selbst-administrierend, weil ein Benutzer keine (manuellen) Eingriffe in die Datenbank vornehmen muss, um ein bislang nicht im Telefonie-Server registriertes Endgerät zu steuern bzw. zu überwachen.

Durch die kennzeichnenden Merkmale der Unteransprüche 2 bis 8 ist das Verfahren in vorteilhafter Weise weiter ausgestaltet. Bevorzugte Ausführungsbeispiele der Anordnung sind in den Unteransprüchen 10 bis 13 niedergelegt, wobei deren Vorteile gleichlautend zu den Vorteilen der entsprechenden Ausgestaltungen des Verfahrens sind.

Ein ergänzbarer Datensatz kann allen in bekannten Anwendungen definierten Typen von Endgeräten zugeordnet werden, wenn das zu steuernde Endgerät ein Kommunikations-Endgerät, ein Teilnehmeranschluss, ein Amtsanschluss, ein Querverbindungsanschluss oder ein sonstiger steuer- und/oder überwachbarer Anschluss eines Kommunikations-Systems ist.

Wenn das Kommunikations-System ein Kommunikationsknoten in einem paketvermittelnden Netzwerk ist, kann der PC mit der installierten Anwendung auch VoIP-Endgeräte und sonstige Geräte und Instanzen in VoIP-Kommunikationsanordnungen steuern und/oder überwachen.

Ein PC mit einer installierten Anwendung kann gleichzeitig auf Endgeräte verschiedener Kommunikationsknoten eines Kommunikationsnetzwerks zugreifen, wenn ein Telefonie-Server mit mehreren Kommunikations-Systemen bzw. Kommunikations-Knoten Endgeräte-Informationen austauscht.

Das Verfahren kann besonders effektiv in einer Third-Party-CTI-Lösung eingesetzt werden, wenn ein Endgerät durch mehrere PC's mit CTI-Anwendungen gesteuert und/oder überwacht wird.

Der Speicherbedarf für die Datenbank wird reduziert, indem ein ergänzter Datensatz gelöscht wird, wenn kein PC mit einer Anwendung das diesem Datensatz zugeordnete Endgerät steuert und/oder überwacht. Dazu wird nach den zur Steuerung / Überwachung ausgeführten Verfahrensschritten in einem weiteren Schritt der Datensatz in der Datenbank zuerst freigegeben und dann gelöscht.

Wenn die Anzahl der ergänzbaren Datensätze eines Telefonie-Servers stets mindestens 1 beträgt, ist sichergestellt, dass stets ein PC mit einer installierten Anwendung Zugriff auf einen ergänzbaren Datensatz hat.

Der Speicher der Datenbank wird optimal ausgenutzt, wenn genau ein ergänzbarer Datensatz zur Verfügung steht.

Ein Ausführungsbeispiel der erfindungsgemäßen Anordnung wird nachfolgend anhand der Zeichnungen erläutert und dient gleichzeitig der Erläuterung des erfindungsgemäßen Verfahrens.

Dabei zeigt:
Fig. 1 eine Anordnung mit einem Kommunikations-Knoten mit daran angeschlossenen Endgeräten, einen Telefonie-Server und einen PC mit einer installierten Anwendung,
Fig. 2 eine schematische Darstellung des KommunikationsKnotens und des Telefonie-Servers mit zugreifbaren Datensätzen,
Fig. 3 eine schematische Darstellung, die die Zuordnung eines Endgerätes zu einem ergänzbaren Datensatz zeigt,
Fig. 4 die schematische Darstellung der Meldung des ergänzten und der Meldung eines neuen ergänzbaren Datensatzes zu einer (hier nicht dargestellten) PC-gestützten Anwendung,
Fig. 5 die Zuweisung der Rufnummer eines weiteren und bislang noch nicht überwachbaren Endgerätes zu einem ergänzbaren Datensatz,
Fig. 6 die schematische Darstellung der Bekanntmachung der Information über die in Fig. 5 schematisch dargestellten Änderungen zu einer (hier nicht dargestellten) PC-gestützten Anwendung,
Fig. 7 in schematischer Darstellung die Freigabe eines nicht weiter verwendeten ergänzten Datensatzes in der Datenbank des Telefonie-Servers, und
Fig. 8 die schematische Darstellung der Löschung des freigegebenen Datensatzes aus der Datenbank.

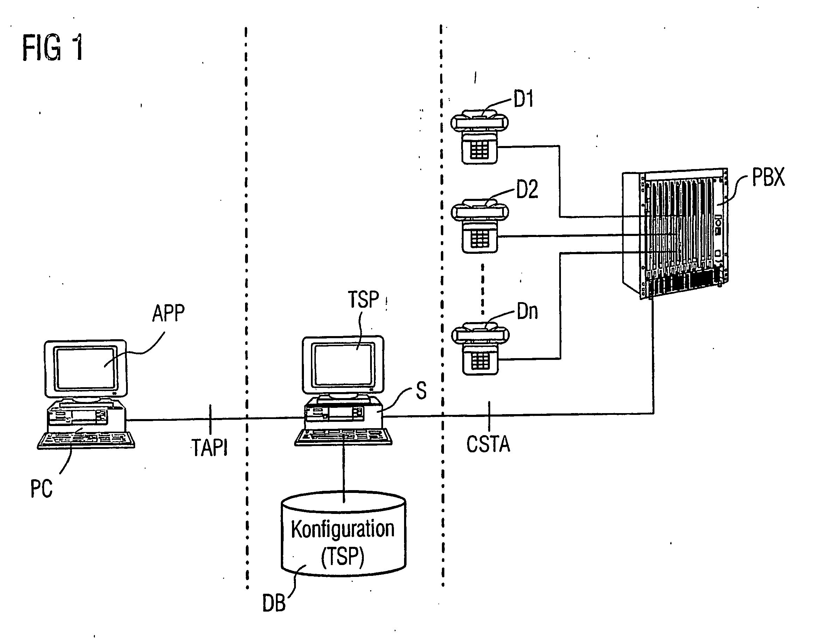

In Fig. 1 ist eine Anordnung mit einer Kommunikationsanlage PBX als Kommunikations-System (Kommunikationsknoten) gezeigt, an dem als Endgeräte Telefone D1...Dn angeschlossen sind. Bei der Kommunikationsanlage PBX handelt es sich um ein ISDN-Vermittlungssystem, wobei die Telefone D1...Dn jeweils über eine separate Leitung an entsprechenden Endgeräte-Schnittstellen angeschlossen sind. Selbstverständlich kann als Kommunikations-System auch ein Gatekeeper in einer VoIP-Kommunikationsumgebung verwendet werden; dann sind die Endgeräte entsprechend ausgestattete Netzelemente in einem Sprach-Datennetz, die anhand von Netzwerkadressen (IP-Adressen) adressiert werden. Die Kommunikationsanlage PBX ist mit einer CTI-Schnittstelle ausgestattet, über die ein Server S angeschlossen ist. Die Verbindung zwischen der Kommunikationsanlage PBX und dem Server S verwendet zur Datenübertragung das CSTA-Protokoll; selbstverständlich können an dieser Stelle auch andere zur Steuerung und Überwachung von Kommunikationsanlagen PBX vorgesehene Kommunikationsprotokolle verwendet werden. Auf dem Server S ist eine Software installiert, die diesem Server S die Funktionalität eines Telefonie-Servers TSP verleiht. Der Server S ist außerdem mit einer Konfigurations-Datenbank, kurz Datenbank DB, zur Speicherung von Datensätzen ausgerüstet. Über ein hier nicht dargestelltes Datennetz ist der Server S mit Computern (PC's) verbunden, wobei hier exemplarisch nur ein Computer PC dargestellt ist. Auf dem Computer PC ist eine Anwendung APP installiert, die es dem Benutzer des Computers PC gestattet, Funktionen der Kommunikationsanlage PBX, der an der Kommunikationsanlage PBX angeschlossenen Endgeräte D1...Dn und weiterer hier nicht dargestellter Geräte und Leitungen zu steuern und/oder zu überwachen.

Die auf dem Computer PC installierte Anwendung APP ist eine sog. "TAPI"-Anwendung (TAPI = Telephony Application Programming Interface) . Aus diesem Grund werden Informationen und Befehle zwischen dem Computer PC und dem Server S nach dem sog. TAPI-Protokoll ausgetauscht; selbstverständlich können auch für die Anwendung APP und die Datenübertragung zwischen dem Computer PC und dem Server S andere Protokolle zur Anwendung kommen.

Die auf dem Computer PC installierte Anwendung APP kann nur solche Endgeräte und Instanzen der Kommunikationsanlage PBX steuern und/oder überwachen (im Folgenden wird verkürzt für beide Vorgänge der Begriff "steuern" verwendet), die in der dem Telefonie-Server TSP zugeordneten Datenbank DB "bekannt" sind, also in dieser Datenbank DB durch einen Datensatz repräsentiert werden. In der Literatur wird dieser Umstand häufig so beschrieben, dass die Anwendung APP "Zugriff auf eine TAPI-Line" haben muss.

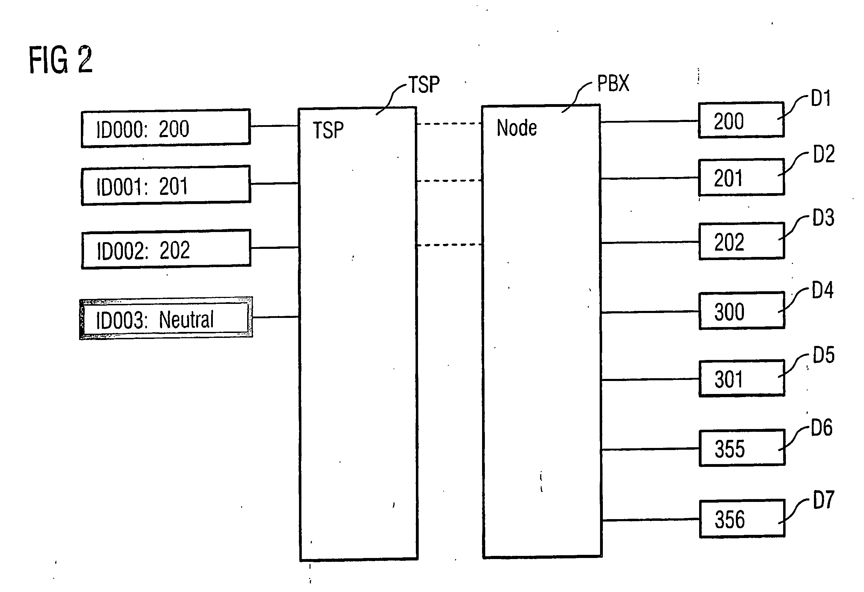

Im Folgenden werden anhand der Figuren 2 bis 8 die Verfahrensschritte erläutert, die notwendig sind, um bislang noch nicht durch die Anwendung APP steuerbare Endgeräte als Datensatz in der Datenbank DB zu hinterlegen, und umgekehrt auch nicht mehr zu steuernde Endgeräte bzw. die solchen Endgeräten zugeordneten Datensätze aus der Datenbank DB wieder zu entfernen.

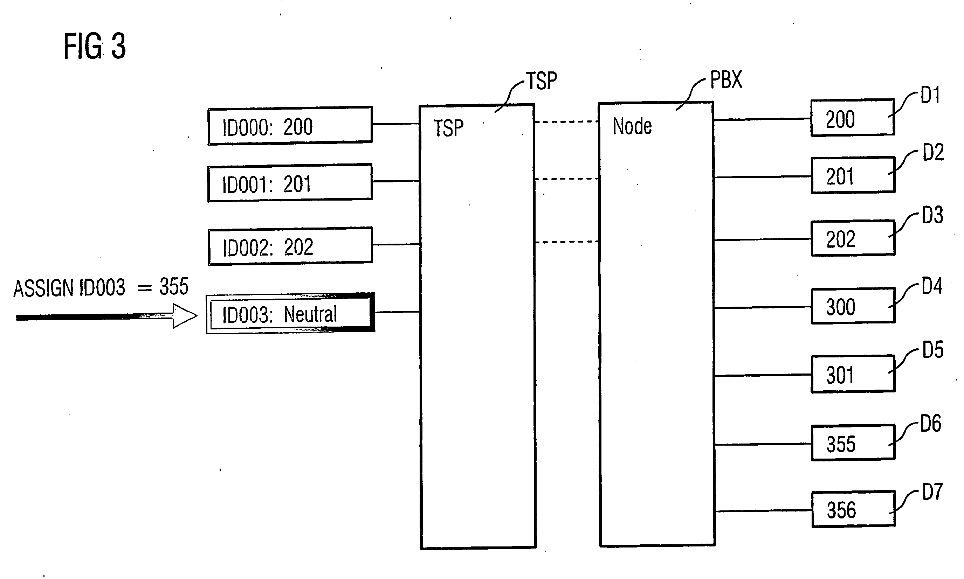

In Fig. 2 sind die Kommunikationsanlage PBX und der Telefonie-Server TSP schematisch dargestellt. Ebenfalls schematisch dargestellt sind die an der Kommunikationsanlage PBX angeschlossenen Endgeräte D1...D7 mit den jeweiligen Endgeräte-Rufnummern 200, 201, 202, 300, 301, 355, 356. Neben dem Telefonie-Server TSP sind die in der (hier nicht dargestellten) Datenbank DB gespeicherten Datensätze dargestellt, auf die der hier ebenfalls nicht dargestellte PC mit der installierten Anwendung APP zugreift. Die Datensätze sind jeweils durch eine individuelle Identifikationsnummer ID000...ID003 und weiterhin mit der Rufnummer 200, 201, 202 desjenigen Endgerätes D1...D7 gekennzeichnet, dem der jeweilige Datensatz zugeordnet ist. Die Bezeichnung "Neutral" besagt dabei, dass es sich-bei dem betreffenden Datensatz um einen ergänzbaren ("neutralen") Datensatz handelt, dem noch keine Rufnummer und damit noch keines der Endgeräte D1...D7 zugeordnet ist. In den Figuren Fig. 3 bis Fig. 8 werden die gleichen Elemente mit den gleichen Bezugszeichen ebenfalls schematisch dargestellt; aus diesem Grund wird bei Bezugnahme auf die Figuren Fig. 3 bis Fig. 8 auf eine erneute Einführung dieser schematisch dargestellten Elemente verzichtet.

In Fig. 3 ist der Fall schematisch dargestellt, dass mit der Anwendung APP das bislang nicht steuerbare Endgerät D6 mit der Rufnummer 355 überwacht werden soll. Dazu greift die Anwendung APP mit einem Zuweisungsbefehl ("Assign") auf den Datensatz mit der Identifikationsnummer ID003 der Datenbank DB zu, der bislang ein neutraler Datensatz ohne zugeordnete Rufnummer ist. Mit Hilfe des "Assign"-Befehls wird diesem Datensatz die Rufnummer 355 des Endgerätes D6 zugewiesen. Über eine hier nicht dargestellte CSTA-Verbindung greift der Telefonie-Server TSP auf die Kommunikationsanlage PBX zu und fragt dabei ab, ob ein Endgerät D6 mit der Rufnummer 355 vorhanden ist, und, falls ja, welche Funktionen und Eigenschaften des Endgerätes D6 mit welchen Methoden gesteuert bzw. überwacht werden können. Diese Informationen werden von der Kommunikationsanlage PBX bereitgestellt und zum Telefonie-Server TSP übermittelt, der wiederum den Datensatz mit der Identifikationsnummer ID003 um die entsprechenden Informationen ergänzt und damit diese Informationen der Anwendung APP zur Verfügung stellt.

Die Zuweisung von Rufnummern und Endgeräte-Informationen ist dabei nicht auf bisher nicht steuerbare Endgeräte D4...D7 beschränkt; sie kann auch bereits in der Datenbank DB repräsentierte Endgeräte D1..D3 betreffen, die dann durch mehrere "TAPI-lines" steuerbar sind.

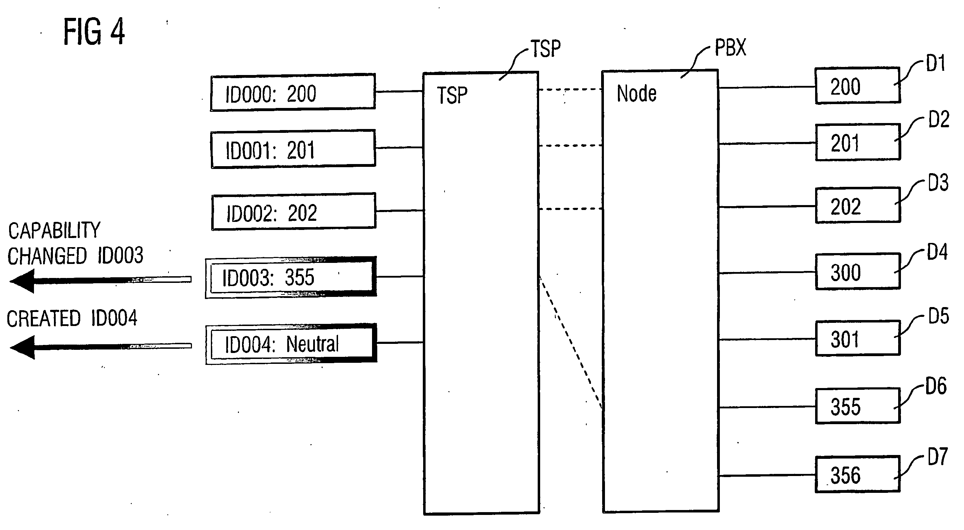

Aus dem bislang neutralen Datensatz ID003 ist durch die Zuweisung ein ergänzter (regulärer) Datensatz geworden, mit dessen Hilfe die Anwendung APP das Endgerät D6 steuern kann. Der Vorgang, dass der nunmehr ergänzte Datensatz ID003 zu der Anwendung APP gemeldet wird, ist in Figur 4 dargestellt. Zu dem Zeitpunkt, zu dem der bislang neutrale Datensatz mit der Identifikationsnummer ID003 durch das Hinzufügen der Rufnummerninformation 355 und der von der Kommunikationsanlage PBX bereitgestellten Informationen zu einem regulären Datensatz wurde, wird durch den Telefonie-Server TSP in der Datenbank DB ein neuer neutraler Datensatz erzeugt, der nun die bislang nicht verwendete Identifikationsnummer ID004 trägt. Auch die Existenz des neuen neutralen Datensatzes mit der Identifikationsnummer ID004 wird der Anwendung APP gemeldet; dieser Vorgang ist in Fig. 4 schematisch dargestellt.

Falls mehrere Anwendungen auf den Telefonie-Server TSP zugreifen, wird die Meldung "capability changed ID003" über die Änderung des Status des Datensatzes ID003 allen Anwendungen APP bekannt gemacht, die die entsprechende Line zu diesem Zeitpunkt geöffnet haben. Außerdem wird die Information über den nunmehr neuen neutralen Datensatz mit der Identifikationsnummer ID004 allen aktiven und auf den Telefonie-Server TSP zugreifenden Anwendungen mitgeteilt.

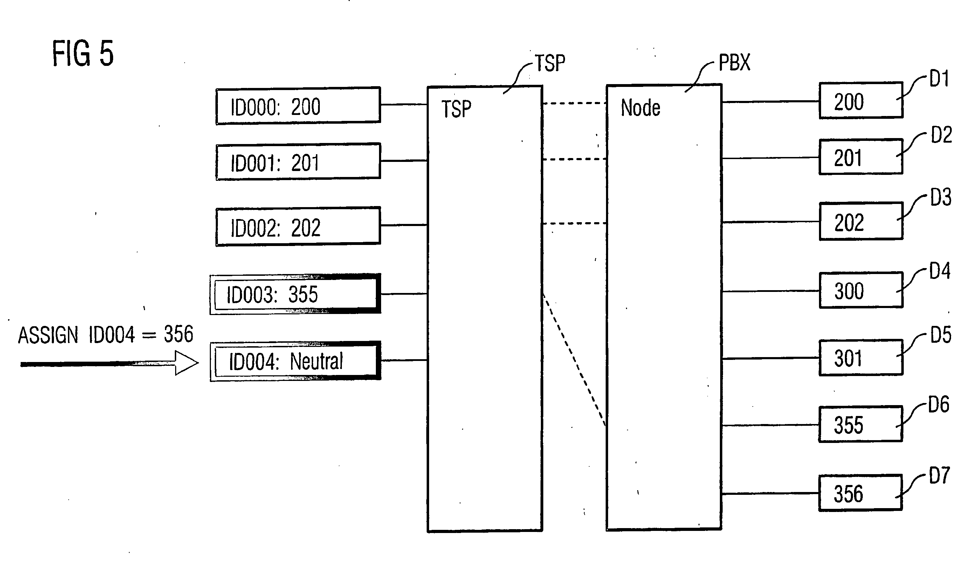

In Fig. 5 ist das "dynamische" Zuweisen einer weiteren Rufnummer 356 eines weiteren Endgerätes D7 zu dem "neuen" neutralen Datensatz mit der Identifikationsnummer ID004 dargestellt. Auch an dieser Stelle wird wieder von der Anwendung APP ein "Assign"-Befehl, diesmal den Datensatz mit der Identifikationsnummer ID004 betreffend, zum Telefonie-Server TSP übermittelt, wo analog zum Verfahren bezüglich des Endgerätes D6 wiederum eine Abfrage an die Kommunikationsanlage PBX ausgelöst wird.

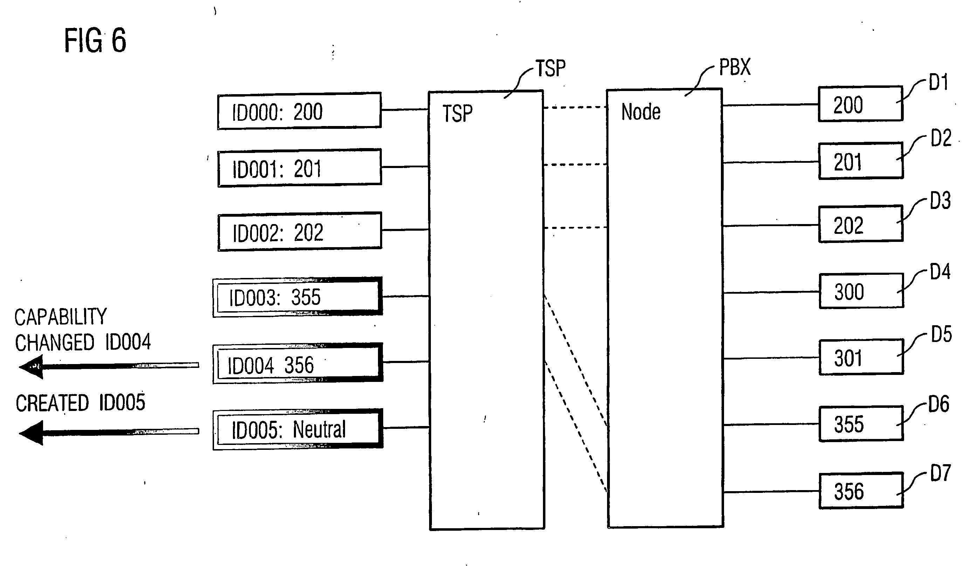

In Fig. 6 ist die Bekanntmachung der Umwandlung des bis dahin neutralen Datensatzes mit der Identifikationsnummer ID004 in einen regulären Datensatz mit der zugeordneten Rufnummer 356 schematisch dargestellt. Die Bekanntmachung erfolgt durch eine Meldung "capability changed ID004", die vom Telefonie-Server TSP zu den Anwendungen APP übermittelt wird. Mit der Umwandlung des Datensatzes mit der Identifikationsnummer ID004 in einen regulären Datensatz ist durch den Telefonie-Server TSP in der Datenbank DB ein neuer neutraler Datensatz mit der Identifikations-Nummer ID005 erzeugt worden, dessen Existenz in angeschlossenen Anwendungen APP durch eine Meldung "created ID005" mitgeteilt wird, so dass jede Anwendung APP wieder Zugriff auf einen neutralen Datensatz hat.

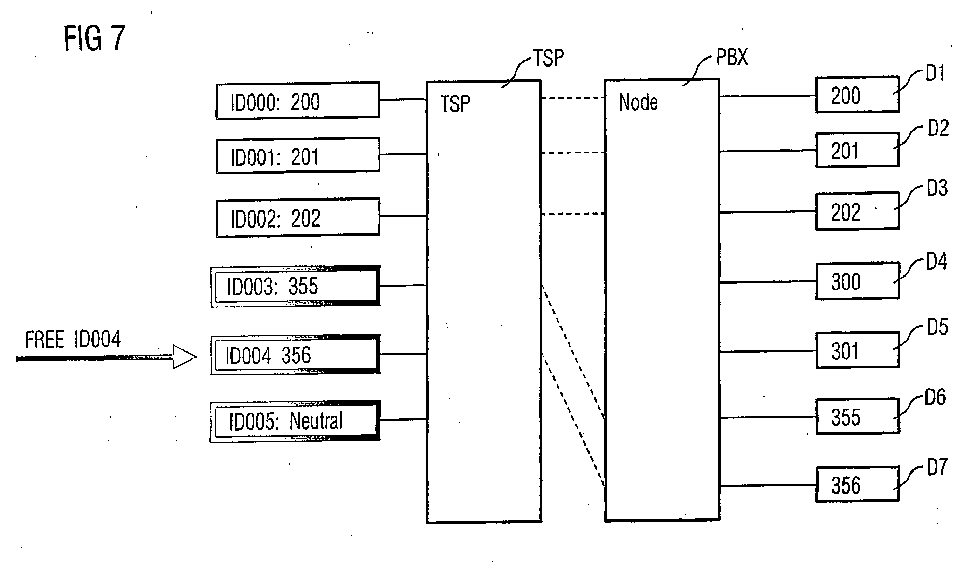

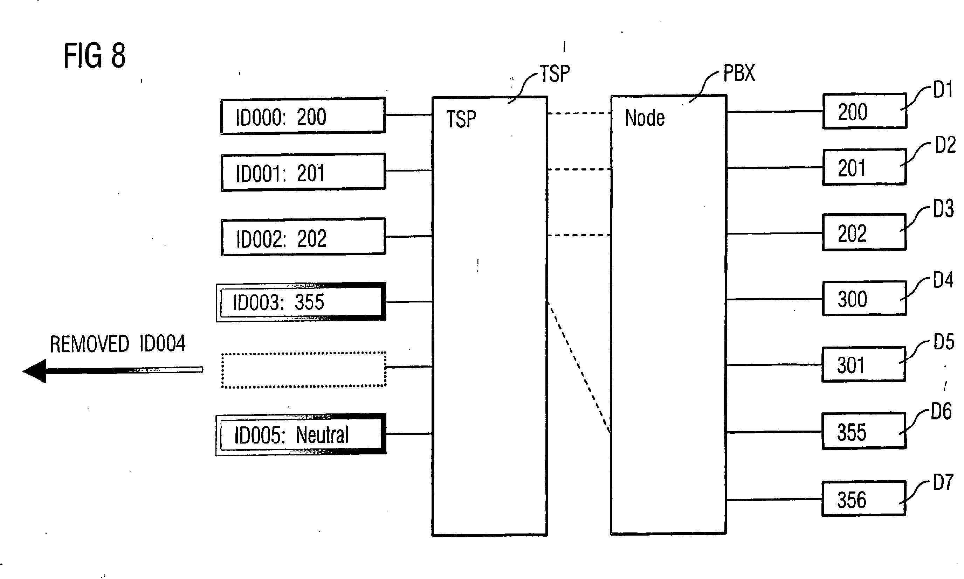

Falls eine Anwendung APP keinen Zugriff mehr auf ein bislang gesteuertes Endgerät benötigt, teilt sie dies dem Telefonie-Server TSP mit einer entsprechenden Meldung mit. In Fig. 7 ist die Freigabe schematisch dargestellt, bei der die Anwendung APP mit der Meldung "Free ID004" dem Telefonie-Server TSP meldet, dass kein Zugriff mehr auf das Endgerät D7 mit der Rufnummer 356 benötigt wird. Der Telefonie-Server TSP überprüft nun, ob in der Datenbank DB eine andere Anwendung über den Datensatz mit der Identifikationsnummer ID004 auf das Endgerät D7 zugreift, dieses also steuert und/oder überwacht. Dies ist im vorliegenden Fall nicht so, so dass der Telefonie-Server TSP den Datensatz mit der Identifikationsnummer ID004 durch Löschung aus der Datenbank entfernt und damit den bislang durch diesen Datensatz ID004 belegten Speicherplatz wieder freigibt. Dieser Vorgang ist in Fig. 8 schematisch dargestellt.

Wie Eingangs erwähnt, gibt es verschiedene Möglichkeiten, wie eine Anwendung startet und auf die in der Datenbank DB vorhandenen Datensätze Zugriff nimmt. Zum einen ist es möglich, dass eine Anwendung APP alle in der Datenbank DB verfügbaren Datensätze ausliest und in den Fällen die Umwandlung des oder eines neutralen Datensatzes in einen regulären Datensatz veranlasst, in denen ein zu steuerndes Endgerät noch nicht durch einen Datensatz in der Datenbank repräsentiert ist. Die nächste Möglichkeit ist, dass zur Steuerung eines Endgerätes eine Anwendung zunächst eine Anfrage an den Telefonie-Server TSP richtet und damit abfragt, ob das interessierende Endgerät bereits durch einen Datensatz in der Datenbank DB repräsentiert wird. In diesem Fall wird nur dann ein neutraler Datensatz in einen regulären Datensatz umgewandelt, wenn das interessierende Endgerät noch nicht repräsentiert ist. Die dritte Möglichkeit ist, dass zur Steuerung eines Endgerätes, welches von der entsprechenden Anwendung APP bislang noch nicht gesteuert wird, von der Anwendung APP auf jeden Fall auf den neutralen Datensatz der Datenbank DB zugegriffen wird und diesem neutralen Datensatz in der beschriebenen Art und Weise die Rufnummer und die spezifischen Informationen des interessierenden Endgerätes zugewiesen wird.

Dieses letztgenannte Verfahren besitzt zum einen den Vorteil, dass auf zusätzliche Abfrageschritte in der Datenbank DB verzichtet werden kann und somit ein schneller Zugriff auf ein weiteres zu überwachendes oder zu steuerndes Endgerät gegeben ist, und zum anderen den Vorteil, dass zur Freigabe eines von dieser Anwendung nun nicht mehr zu steuernden Endgerätes keine Abfrage gestartet werden muss, ob der entsprechende Datensatz (also die entsprechende "Line") von anderen Anwendungen noch benutzt wird. Dem steht der Nachteil gegenüber, dass bei den letztgenannten Verfahren ein- und dasselbe Endgerät unter Umständen mehrfach durch Datensätze im Telefonie-Server repräsentiert wird, wodurch der Speicherbedarf steigt. Die entsprechende Betriebsweise wird von der jeweiligen Anwendung APP oder vom Telefonie-Server TSP vorgegeben; mit der in Fig. 1 dargestellten Anordnung sind alle drei Betriebsarten durchführbar.

## Patentansprüche

1. Verfahren zur Steuerung und / oder Überwachung eines an ein Kommunikations-System (PBX) angeschlossenen Endgerätes (D1...Dn) mit zumindest einer steuer- und / oder überwachbaren Funktion,
wobei
- eine auf einem PC (PC) installierte Anwendung (APP) eine erste Nachricht mit der Rufnummer eines von ihr zu steuernden und / oder zu überwachenden Endgerätes (D1...Dn) zu einem Telefonie-Server (TSP) sendet,
- der Telefonie-Server (TSP) diese Rufnummer zum Kommunikations-System (PBX) übermittelt,
- das Kommunikations-System (PBX) in einer Antwort Endgeräte-Informationen übermittelt, welche beschreiben, welche der Funktionen des dieser Rufnummer zugeordneten Endgerätes (D1...Dn) steuerbar und / oder überwachbar sind,
- der Telefonie-Server (TSP) eine Datenbank (DB) mit steuer- und / oder überwachbare Endgeräte (D1...Dn) beschreibende Datensätzen aufweist, welche durch die Rufnummer und die vom Kommunikations-System (PBX) empfangenen Informationen dieses Endgerätes (D1...Dn) ergänzt sind, und wobei die Datenbank DB zumindest einen vorhandenen ergänzbaren Datensatz aufweist, der eine Identifikationsnummer enthält und dem eines der Endgeräte (D1...Dn) zugewiesen wird und der dabei um die Rufnummer und die vom Kommunikations-System (PBX) empfangenen Endgeräte-Informationen dieses Endgerätes (D1...Dn) ergänzt wird,
- der Telefonie-Server (TSP) daraufhin einen neuen ergänzbaren Datensatz mit einer weiteren Identifikationsnummer erzeugt, und wobei
- der Telefonie-Server (TSP) zu dem PC (PC) mit der Anwendung (APP) aus dem ergänzten Datensatz die Rufnummer und die Endgeräte-Informationen übermittelt, so dass das Endgerät (D1...Dn) durch den PC (PC) mit der Anwendung (APP) steuer- und / oder überwachbar ist.

2. Verfahren nach Anspruch 1,
**dadurch gekennzeichnet,**
**dass** für das zu steuernde Endgerät (D1...Dn) ein Kommunikations-Endgerät, ein Teilnehmeranschluss, ein Amtsanschluss, ein Querverbindungsanschluss oder ein sonstiger steuer- und / oder überwachbarer Anschluss eines Kommunikations-Systems (PBX) verwendet wird.

3. Verfahren nach einem der vorhergehenden Ansprüche,
**dadurch gekennzeichnet,**
**dass** als das Kommunikations-System (PBX) ein Kommunikationsknoten in einem paketvermittelnden Netzwerk verwendet wird.

4. Verfahren nach einem der vorhergehenden Ansprüche,
**dadurch gekennzeichnet,**
**dass** der Telefonie-Server (TSP) mit mehreren Kommunikations-Systemen (PBX) die Endgeräte-Informationen austauscht.

5. Verfahren nach einem der vorhergehenden Ansprüche,
**dadurch gekennzeichnet,**
**dass** ein Endgerät (D1...Dn) durch mehrere PC's (PC) mit Anwendungen (APP) gesteuert und / oder überwacht wird.

6. Verfahren nach einem der vorhergehenden Ansprüche,
**dadurch gekennzeichnet,**
**dass** der ergänzte Datensatz gelöscht wird, wenn kein PC (PC) mit einer Anwendung (APP) das dem Datensatz zugeordnete Endgerät (D1....Dn) steuert und / oder überwacht.

7. Verfahren nach einem der vorhergehenden Ansprüche,
**dadurch gekennzeichnet,**
**dass** die Anzahl der ergänzbaren Datensätze eines Telefonie-Servers (TSP) stets mindestens eins ist.

8. Verfahren nach einem der.Anspruch 7,
**dadurch gekennzeichnet,**
**dass** stets genau ein ergänzbarer Datensatz zur Verfügung steht.

9. Anordnung zur Steuerung und / oder Überwachung eines Endgerätes (D1...Dn) mit zumindest einer steuer- und / oder überwachbaren Funktion,
- mit einem Kommunikations-System (PBX), an dem das Endgerät (D1...Dn) angeschlossenen ist,
- mit einem Telefonie-Server (TSP), der mit dem Kommunikations-System (PBX) zum Austausch von Endgeräte-Informationen verbunden ist und der eine Datenbank (DB) aufweist, und
- mit einem PC (PC), der mit dem Telefonie-Server (TSP) verbunden ist und auf dem zur Steuerung und / oder Überwachung eine Anwendung (APP) installiert ist,
wobei
- die Anwendung (APP) zur Übermittlung einer erster Nachricht mit der Rufnummer eines von ihr zu steuernden und / oder zu überwachenden Endgerätes (D1...Dn) zu einem Telefonie-Server (TSP) ausgestaltet ist,
- der Telefonie-Server (TSP) Mittel zur Übermittlung dieser Rufnummer zum Kommunikations-System (PBX) aufweist,
- das Kommunikations-System (PBX) derart ausgestaltet ist, dass es in einer Antwort Endgeräte-Informationen übermittelt, welche beschreiben, welche der Funktionen des dieser Rufnummer zugeordneten Endgerätes (D1...Dn) steuerbar und / oder überwachbar sind,
- die Datenbank (DB) steuer- und / oder überwachbare Endgeräte (D1...Dn) beschreibende Datensätze aufweist, welche durch die Rufnummer und die vom Kommunikations-System (PBX) empfangenen Informationen dieses Endgerätes (D1...Dn) ergänzt sind,
- die Datenbank (DB) zumindest einen vorhandenen ergänzbaren Datensatz aufweist, der eine Identifikationsnummer enthält und dem eines der Endgeräte (D1...Dn) zugewiesen wird und der dabei um die Rufnummer und die vom Kommunikations-System (PBX) empfangenen Endgeräte-Informationen dieses Endgerätes (D1...Dn) ergänzt wird,
- der Telefonie-Server (TSP) derart eingerichtet ist, dass er nach der Zuweisung einen neuen ergänzbaren Datensatz mit einer weiteren Identifikationsnummer erzeugt, und
- der Telefonie-Server (TSP) so ausgestaltet ist, dass er zu dem PC (PC) mit der Anwendung (APP) aus dem ergänzten Datensatz die Rufnummer und die Endgeräte-Informationen übermittelt, so dass das Endgerät (D1...Dn) durch den PC (PC) mit der Anwendung (APP) steuer- und / oder überwachbar ist.

10. Anordnung nach Anspruch 9,
**dadurch gekennzeichnet,**
**dass** das zu steuernde Endgerät (D1...Dn) ein Kommunikations-Endgerät, ein Teilnehmeranschluss, ein Amtsanschluss, ein Querverbindungsanschluss oder ein sonstiger steuer- und / oder überwachbarer Anschluss eines Kommunikations-Systems (PBX) ist.

11. Anordnung nach einem der Ansprüche 9 oder 10,
**dadurch gekennzeichnet,**
**dass** das Kommunikations-System (PBX) ein Kommunikationsknoten in einem paketvermittelnden Netzwerk ist.

12. Anordnung nach einem der Ansprüche 9 bis 11,
**dadurch gekennzeichnet,**
**dass** der Telefonie-Server (TSP) Mittel zum Austausch von Endgeräte-Informationen mit mehreren Kommunikations-Systemen (PBX) aufweist.

13. Anordnung nach einem der Ansprüche 9 bis 12,
**dadurch gekennzeichnet,**
**dass** mehrere PC's (PC) mit Anwendungen (APP) zur Steuerung und / oder Überwachung eines Endgerätes (D1...Dn) vorhanden sind.

## Claims

1. Method for controlling and/or monitoring a terminal (D1...Dn) connected to a communication system (PBX) with at least one controllable and/or monitorable function,
wherein
- an application (APP) installed on a PC (PC) sends a first message with the telephone number of a terminal (D1...Dn) that it is to control and/or monitor to a telephony server (TSP),
- the telephony server (TSP) transmits said telephone number to the communication system (PBX),
- in a response, the communication system (PBX) transmits terminal information that describes which of the functions of the terminal (D1...Dn) associated with said telephone number are controllable and/or monitorable,
- the telephony server (TSP) has a data base with data records describing controllable and/or monitorable terminals (D1...Dn), said data records being supplemented by the telephone number and the information on said terminal (D1...Dn) received by the communication system (PBX), and wherein the data base DB has at least one existing supplementable data record, which includes an identification number and to which one of the terminals (D1... Dn) is assigned and which, in this case, is supplemented by the telephone number and the terminal information of said terminal (D1... Dn) received by the communication system,
- the telephony server (TSP) thereupon generates a new supplementable data record with an additional identification number, and wherein
- the telephony server (TSP) transmits to the PC (PC) with the application (APP) from the supplemented data record the telephone number and the terminal information, such that the terminal (D1... Dn) is controllable and/or monitorable by the PC (PC) with the application (APP),

2. Method according to Claim 1, **characterized in that** a communication terminal, a subscriber connection, an exchange connection, a cross-connect connection or another controllable and/or monitorable connection of a communication system (PBX) is used for the terminal to be controlled (D1... Dn).

3. Method according to one of the preceding claims, **characterized in that** a communication node in a packet-switched network is used as the communication system (PBX).

4. Method according to one of the preceding claims, **characterized in that** the telephony server (TSP) exchanges the terminal information with a plurality of communication systems (PBX).

5. Method according to one of the preceding claims, **characterized in that** a terminal (01", own) is controlled and/or monitored by a plurality of PCs (PC) with applications (APP).

6. Method according to one of the preceding claims, **characterized in that** the supplemented data record is deleted when no PC (PC) with an application (APP) controls and/or monitors the terminal (D1...Dn) associated with the data record.

7. Method according to one of the preceding claims, **characterized in that** the number of supplementable data records of a telephony server (TSP) is always at least one.

8. Method according to claim 7, **characterized in that** exactly one supplementable data record is always available.

9. Arrangement for controlling and/or monitoring a terminal (D1...Dn) with at least one controllable and/or monitorable function,
- with a communication system (PBX) to which the terminal (D1...Pn) is connected,
- with a telephony server (TSP) which is connected to the communication system for exchanging terminal information and which has a data base (DB), and
- with a PC (PC) that is connected to the telephony server (TSP) and on which an application (APP) for controlling and/or monitoring is installed,
wherein
- the application (APP) is developed for transmitting a first message with the telephone number of a terminal (D1...Dn) which it is to control and/or monitor to a telephony server (TSP),
- the telephony server (TSP) has means for transmitting said telephone number to the communication system (PBX),
- the communication system (PBX) is developed in such a manner that in a response it transmits terminal information that describes which of the functions of the terminal (D1... Dn) associated to said telephone number are controllable and/or monitorable,
- the data base (DB) has data records describing controllable and/or monitorable terminals (D1...Dn), said data records being supplemented by the telephone number and the information on said terminal (D1... Dn) received by the communication system (PBX),
- the data base (DB) has at least one existing supplementable data record, which includes the identification number and to which one of the terminals (D1...Dn) is assigned and which, in this case, is supplemented by the telephone number and the terminal information on said terminal (D1...Dn) received by the communication system (PBX),
- the telephony server (TSP) is set up in such a manner that after the assignment it generates a new supplementable data record with another identification number and
- the telephony server (TSP) is developed such that it transmits the telephone number and the terminal information from the supplemented record to the PC (PC) with the application (APP), such that the terminal (D1...Dn) is controllable and/or monitorable by the PC (PC) with the application (APP).

10. Arrangement according to Claim 9, **characterized in that** the terminal (D1...Dn) to be controlled is a communication terminal, a subscriber terminal, an exchange connection, a cross-connect connection or another controllable and/or monitorable connection of a communication system (PBX).

11. Arrangement according to one of claims 9 or 10, **characterized in that** the communication system (PBX) is a communication node in a packet-switching network.

12. Arrangement according to one of claims 9 to 11, **characterized in that** the telephony server (TSP) has means for exchanging terminal information with a plurality of communication systems (PBX).

13. Arrangement according to one of claims 9 to 12, **characterized in that** a plurality of PCs (PC) with applications (APP) are present for controlling and/or monitoring a terminal (D1...Dn).

## Revendications

1. Procédé pour commander et/ou surveiller un terminal (D1...Dn) raccordé à un système de communication (PBX) avec au moins une fonctions de commande et/ou de surveillance,
dans lequel
- une application (APP) installée sur un ordinateur individuel (PC) envoie à un serveur de téléphonie (TSP) un premier message comportant le numéro d'appel d'un terminal (D1...Dn) à commander et/ou surveiller par cette application,
- le serveur de téléphonie (TSP) transmet ce numéro d'appel au système de communication (PBX),
- le système de communication (PBX) transmet dans une réponse des informations de terminal qui décrivent les fonctions du terminal (D1...Dn) attribué à ce numéro d'appel qui peuvent être commandées et/ou surveillées,
- le serveur de téléphonie (TSP) comporte une banque de données (DB) ayant des enregistrements qui décrivent des terminaux (D1...Dn) pouvant être commandés et/ou surveillés et qui sont complétés par le numéro d'appel et les informations de ce terminal (D1...Dn) reçues par le système de communication (PBX), et la banque de données DB comportant au moins un enregistrement présent pouvant être complété qui contient un numéro d'identification et auquel est affecté un des terminaux (D1...Dn) et qui, ce fraisant, est complété avec le numéro d'appel et les informations de terminal de ce terminal (D1...Dn) reçues par le système de communication (PBX),
- le serveur de téléphonie (TSP) génère ensuite un nouvel enregistrement pouvant être complété comportant un autre numéro d'identification, et sachant que,
- à partir de l'enregistrement complété, le serveur de téléphonie (TSP) transmet à l'ordinateur individuel (PC) doté de l'application (APP) le numéro d'appel et les informations de terminal de sorte que le terminal (D1...Dn) puisse être commandé et/ou surveillé par l'ordinateur individuel (PC) doté de l'application (APP).

2. Procédé selon la revendication 1,
**caractérisé en ce**
**que** l'on emploie pour le terminal (D1...Dn) à commander un terminal de communication, un raccordement d'abonné, un raccordement de centre de commutation, un raccordement de ligne de jonction ou un autre raccordement, pouvant être commandé et/ou surveillé, d'un système de communication (PBX).

3. Procédé selon l'une quelconque des revendications précédentes,
**caractérisé en ce**
**qu'**un noeud de communication sert de système de communication (PBX) dans un réseau à commutation de parquets.

4. Procédé selon l'une quelconque des revendications précédentes,
**caractérisé en ce**
**que** le serveur de téléphonie (TSP) échange les informations de terminal avec plusieurs systèmes de communication (PBX) .

5. Procédé selon l'une quelconque des revendications précédentes,
**caractérisé en ce**
**qu'**un terminal (D1...Dn) est commandé et/ou surveillé par plusieurs ordinateurs individuels (PC) dotés d'applications (APP).

6. Procédé selon l'une quelconque des revendications précédentes,
**caractérisé en ce**
**que** l'enregistrement complété est effacé lorsqu'aucun ordinateur individuel (PC) doté d'une applications (APP) ne commande et/ou ne surveille le terminal (D1...Dn) attribué à l'enregistrement.

7. Procédé selon l'une quelconque des revendication précédentes,
**caractérisé en ce**
**que** le nombre des enregistrements d'un serveur de téléphonie (TSP) pouvant être complétés est toujours au moins égal à un.

8. Procédé selon la revendication 7,
**caractérisé en ce**
**qu'**exactement un enregistrement pouvant être complété est toujours disponible.

9. Dispositif pour commander et/ou surveiller un terminal (D1...Dn) avec au moins une fonction pouvant être commandée et/ou surveillée,
- avec un système de communication (PBX), auquel est raccordé le terminal (D1...Dn),
- avec un serveur de téléphonie (TSP), qui est relié au système de communication (PBX) afin d'échanger des informations de terminal et qui comporte une banque de données (DB), et
- avec un ordinateur individuel (PC), qui est relié au serveur de téléphonie (TSP) et sur lequel est installée une application (APP) à des fins de commande et/ou de surveillance,
sachant que
- l'application (APP) est conçue pour transmettre à un serveur de téléphonie (TSP) un premier message avec le numéro d'appel d'un terminal (D1....Dn) qu'elle doit commander et/ou surveiller,
- le serveur de téléphonie (TSP) comporte un moyen pour transmettre ce numéro d'appel au système de communication (PBX),
- le système de communication (PBX) est conçu de manière telle qu'il transmette dans une réponse des informations de terminal qui décrivent les fonctions du terminal (D1...Dn) attribué à ce numéro d'appel qui peuvent être commandées et/ou surveillées,
- la banque de données (DB) comporte des enregistrements, décrivant des terminaux (D1...Dn) pouvant être commandés et/ou surveillés, qui sont complétés par le numéro d'appel et les informations de ce terminal (D1...Dn) reçues par le systèmes de communication (PBX),
- la banque de données (DB) comporte au moins un enregistrement présent pouvant être complété qui continent un numéro d'identification et auquel est affecté un des terminaux (D1...Dn) et qui, ce faisant, est complété par le numéro d'appel et les informations de terminal de ce terminal (D1...Dn) reçues par le système de communication (PBX),
- le serveur de téléphonie (TSP) est réalisé d'une manière telle que, après l'affectation, il génère un nouvel enregistrement, pouvant être complété, comportant un autre numéro d'identification, et
- le serveur de téléphonie (TSP) est conçu de sorte que, à partir de l'enregistrement complété, il transmette à l'ordinateur individuel (PC) doté de l'application (APP) le numéro d'appel et les informatisons de terminal de sorte que le terminal (D1...Dn) puisse être commandé et/ou surveillé par l'ordinateur individuel (PC) doté de l'application (APP).

10. Dispositif selon la revendication 9,
**caractérisé en ce**
**que** le terminal (D1...Dn) à commander est un terminal de communication, un raccordement d'abonné, un raccordement de centre de commutation, un raccordement de ligne de jonction ou un autre raccordement, pouvant être commandé et/ou surveillé, d'un système de communication (PBX).

11. Dispositif selon l'une des revendications 9 ou 10,
**caractérisé en ce**
**que** le système de communication (PBX) est un noeud de communication dans un réseau à commutation de paquets.

12. Dispositif selon l'une des revendications 9 à 11,
**caractérisé en ce**
**que** le serveur de téléphonie (TSP) comporte un moyen pour échanger des informations de terminal avec plusieurs systèmes de communication (PBX).

13. Dispositif selon l'une des revendications 9 à 12,
**caractérisé en ce**
**que** plusieurs ordinateurs individuels (PC) dotés d'applications (APP) destinées à commander et/ou surveiller un terminal (D1...Dn) sont présents.
